# EUROPÄISCHE PATENTSCHRIFT

(11) **EP 2 936 790 B1**
(45) Veröffentlichungstag und Bekanntmachung des Hinweises auf die Patenterteilung: **26.06.2019**
(21) Anmeldenummer: 13815689.8
(22) Anmeldetag: 09.12.2013
(51) Int. Cl.: H04M 3/523, H04M 3/51

(54) **VERFAHREN ZUR OPTIMALEN AUSLASTUNG EINES IN EINEM TELEKOMMUNIKATIONSSYSTEM VORGESEHENEN APPLIKATIONSGESTEUERTEN WARTEFELDES FÜR ANRUFE**
METHOD FOR OPTIMUM UTILIZATION OF AN APPLICATION-CONTROLLED QUEUE FOR CALLS THAT IS PROVIDED IN A TELECOMMUNICATION SYSTEM
PROCÉDÉ D'UTILISATION OPTIMALE DE LA CAPACITÉ D'UNE FILE D'ATTENTE D'APPELS COMMANDÉE PAR UNE APPLICATION DANS UN SYSTÈME DE TÉLÉCOMMUNICATION

(30) Priorität: 19.12.2012 DE 102012024882
(43) Veröffentlichungstag der Anmeldung: 28.10.2015
(73) Patentinhaber: Unify GmbH & Co. KG, 80807 München (DE)
(72) Erfinder: RIST, Claus, 44795 Bochum (DE); GLASER, Martin, 59192 Bergkamen (DE); VOLKMANN, Michael, 58313 Herdecke (DE)
(74) Vertreter: Fritzsche, Thomas
(86) Internationale Anmeldenummer: PCT/EP2013/003709
(87) Internationale Veröffentlichungsnummer: WO 2014/094997

(56) Entgegenhaltungen:
- EP-A2- 1 091 548
- US-A1- 2003 031 309
- US-A1- 2003 035 531

## Beschreibung

Die vorliegende Erfindung betrifft ein Verfahren zur optimalen Auslastung eines in einem Telekommunikationssystem vorgesehenen applikationsgesteuerten Wartefeldes gemäß dem Oberbegriff des Anspruchs 1, ein entsprechendes Computerprogrammprodukt sowie einen zu dessen Speicherung bestimmten maschinenlesbaren Datenträger und schließlich ein Telekommunikationssystem gemäß dem Oberbegriff des Anspruchs 9.

Bei Telekommunikationssystemen im Umfeld von Callcentern ist es bekannt, UCD-Ansagen (wobei UCD für "Universal Call Distribution" bzw. für eine Anrufverteileinheit steht) für wartende Anrufe mittels zweier Varianten durch CTI-Applikationen (CTI steht für "Computer Telephony Integration") einzuspielen. Als hierfür in Frage kommende Telekommunikationssysteme sind beispielsweise HiPath 3000 und OpenScape Office zu nennen. Diese Varianten sind:
a) CSTA Service Play Message und
b) CSTA Service Deflect Call,
wobei CSTA für Computer Supported Telecommunications Applications, eine von der ECMA standardisierte Protokollspezifikation, steht, die für den Datenverkehr zwischen einer Telefonanlage und Computerprogrammen verwendet wird.

Die Variante a) weist den Vorteil auf, dass mehrere Anrufer gleichzeitig - also gebündelt - unidirektional eine bestimmte Ansage hören können. Hierbei handelt es sich häufig um die Anschaltung von handelsüblichen Ansageports. Eine Einflussmöglichkeit des wartenden Anrufs bzw. der diesen Anruf tätigenden Person auf die weitere Behandlung des Anrufs ist jedoch hierbei nicht möglich.

Bei der Variante b) kann jeweils nur ein Anruf exklusiv mit einer Ansage verbunden werden. Das hat aber den Vorteil, den Anrufer bidirektional anzuschalten, um gegebenenfalls Steuerkommandos einspeisen zu können, mit denen die weitere Behandlung des wartenden Anrufs beeinflusst werden kann, wozu beispielsweise eine Weitervermittlung an einen Agenten oder an eine bestimmte Komponente des angerufenen Inhabers bzw. Betreibers des Callcenters gehört. Derartige Steuerkommandos können beispielsweise mittels DTMF (steht für "Dual-tone multi-frequency" bzw. "Doppelton-Mehrfrequenz") eingespeist werden, was ein Mehrfrequenz-Wahlverfahren ist. Neben den handelsüblichen Ansageports können hier auch Ansagespeicher, wie insbesondere sogenannte Media-Server verwendet werden, die meist über SIP (Session Initiation Protocol) oder im Falle der vorgenannten OpenScape Office und HiPath 3000 über SIP-Q (einer Variante von SIP) angeschaltet werden. Eine Anschaltung ist jedoch auch mittels anderer Protokolle wie beispielsweise HTTP möglich.

Während Anrufe bei der Variante (a) im Wartefeld verweilen, das auch als Systemqueue bezeichnet wird, verlassen Anrufe bei der Variante (b) zum Zeitpunkt der Rufannahme des Ansagengerätes über SIP/SIP-Q automatisch das Wartefeld. Dadurch verliert der betreffende Anruf die aktuellen Wartefeldeigenschaften, wie insbesondere die Position im Wartefeld und die bisher aufgelaufene Wartezeit. Außerdem ist nach Ablauf der betreffenden Ansage die Wiederaufnahme des Anrufes, an den die Ansage angeschaltet war, in das Wartefeld bzw. die Systemqueue nicht gewährleistet, wenn in der Zwischenzeit das sogenannte Wartefeldlimit, also die maximale Anzahl an Plätzen im Wartefeld, erreicht oder überschritten worden ist. Dies würde für einen Anrufer bedeuten, dass hier die Verbindung zu dem Callcenter abgebrochen wird, wenn er nicht sofort beispielsweise an einen Agenten vermittelt werden kann, da er keinen Platz im Wartefeld mehr bekommen kann. Um dieses Problem zu umgehen, wurde bisher ein Teil des Wartefelds für das Wiedereinreihen von Anrufen, die nach Ablauf einer entsprechenden bidirektionalen Ansage wieder in das Wartefeld zurückkehren müssen, reserviert. Hierzu wird üblicherweise das Wartefeldlimit herabgesetzt, bis zu dem neu eingehende Anrufe in das Wartefeld eingereiht werden, um die verbleibende Kapazität des Wartefelds für "zurückkehrende" bzw. zurückvermittelte Anrufe nutzen zu können. Ein Erfahrungswert für dieses Wartefeldlimit liegt bei etwa 2/3 der eigentlichen Wartefeldgröße. Nachteilig bei dieser Auslegung ist zum einen, dass nicht das gesamte Wartefeld genutzt werden kann, und dass zum anderen die Wartefeldauslastung im System nicht der Wartefeldauslastung in der Applikation entspricht. Dabei ist die Wartefeldauslastung in der Applikation die Wartefeldauslastung im System zuzüglich der angeschalteten Ansagen. Demzufolge resultiert als weiterer Nachteil, dass sich eine unterschiedliche Darstellung der Wartefeldauslastung für Agenten, Anrufer und Supervisoren ergibt.

In der Veröffentlichung US2003035531 wird ein Verfahren, System und Produkt für die Verwaltung einer Warteschlange beschrieben. Ein Call-Center erhält einen ankommenden Telefonanruf von mindestens einem Anrufer und platziert den Anrufer in einer anfänglichen Position in der Warteschlange. Hier kann der Anrufer eine Anforderung tätigen in der Warteschlange zu pausieren. Sofern der Anrufer bereit ist zurückzukehren oder die Pausenzeit abgelaufen ist, wird er wieder in der Warteschlange aktiv.

Gemäß der Veröffentlichung US 2003031309 sorgen ein System und Verfahren für die Verarbeitung und Weiterleitung von ankommenden Anrufen für ein Call Center. Das System ist speziell so konfiguriert, dass eingehende Anrufe priorisiert werden und in einer virtuellen Warteschlange platziert werden, wenn festgestellt wird, dass aktuell kein Bearbeiter verfügbar ist. Während sich der Anrufer in der Warteschlange befindet, kann der Anrufer verschiedenen interaktiven Funktionen ausfühern während gleichzeitig seine Positionspriorität in der virtuellen Warteschlange beibehalten wird.

Der vorliegenden Erfindung liegt die Aufgabe zugrunde, diese Nachteile zu beheben und ein Verfahren zur Verwaltung eines in einem Telekommunikationssystem vorgesehenen, durch eine Applikation gesteuerten Wartefelds sowie ein entsprechendes Telekommunikationssystem anzugeben, worin das Wartefeld optimal ausgelastet wird.

Diese Aufgabe wird durch ein Verfahren gemäß Anspruch 1, ein das Verfahren implementierendes Computerprogrammprodukt bzw. Computerprogramm gemäß Anspruch 4, einen das Computerprogrammprodukt speichernden Datenträger gemäß Anspruch 5 sowie ein zur Ausführung des genannten Verfahrens geeignetes Telekommunikationssystem gemäß Anspruch 6 gelöst. Vorteilhafte Weiterbildungen der Erfindung sind Gegenstand der abhängigen Ansprüche.

Das erfindungsgemäße Verfahren ist bei einem in einem Telekommunikationssystem vorgesehenen, durch eine Applikation gesteuerten Wartefeld für Anrufe anwendbar, deren jeder eine bestimmte Wartefeldeigenschaft aufweist. Eine derartige Wartefeldeigenschaft kann beispielsweise die Position des Anrufs in dem Wartefeld, also dessen Priorität in der Bearbeitungsreihenfolge, oder die bisher aufgelaufene Wartezeit sein. Jeder in dem Wartefeld "geparkte" Anruf kann - zumindest zunächst - zum Verbleib in dem Wartefeld bestimmt sein oder aber einem Agenten zugewiesen werden. Alternativ kann jeder Anruf einer Ansage zugeordnet werden, die von einem Ansagespeicher aus abgespielt wird und zu einer Interaktion bzw. Wechselwirkung mit dem Anruf fähig ist. Derartige Ansagen werden als bidirektionale Ansagen bezeichnet. Wenn nun ein Anruf einer bidirektionalen Ansage zugeordnet bzw. mit dieser verbunden wird, ist erfindungsgemäß vorgesehen, dass der betreffende Anruf gerade nicht seine Wartefeldeigenschaft wie insbesondere die Position bzw. Priorität im Wartefeld verliert, sondern einen Parameter zugewiesen bekommt, der dazu führt, dass der Anruf seine Wartefeldeigenschaft behält, was in dem genannten Beispiel der Position im Wartefeld bedeutet, dass der entsprechende Platz im Wartefeld für den Anruf freigehalten und nicht vom nächsten Anruf eingenommen wird. Dadurch wird zum einen erreicht, dass eine Wiederaufnahme des Anrufs in das Wartefeld an der ursprünglichen Position gewährleistet ist und der Anrufer somit durch die "Zwischenschaltung" der bidirektionalen Ansage - und seine unter Umständen ermöglichte Beeinflussung der weiteren Bearbeitung seines Anrufs - nicht dadurch benachteiligt wird, dass er am Ende der Ansage an das Ende der Warteschlange verwiesen wird.

Andererseits kann dadurch das Wartefeld vollständig mit neu eingehenden Anrufen belegt werden, da keine Reserveplätze für von bidirektionalen Ansagen zurückvermittelte Anrufe vorgehalten werden müssen, da derartige Anrufe ihren ursprünglichen Platz im Wartefeld behalten. Hierdurch ist eine optimale Auslastung des Wartefelds möglich. Außerdem wird dadurch eine Gleichheit der Wartefeldauslastung sowohl in der Applikation als auch im System sichergestellt, und die Wartefeldauslastung wird für Agenten, Anrufer und Supervisoren in gleicher Weise dargestellt. In anderen Worten kann auch von einer maximalen Auslastung des Wartefeldes gesprochen werden. Ferner ist durch das erfindungsgemäße Verfahren eine verbesserte Anruferführung möglich, da ein Anrufer bzw. ein Anruf problemlos im Wartefeld "geparkt" werden kann und dies auch ohne Komforteinbuße für den Anrufer möglich ist, da einem betreffenden Anrufer dann nicht jedes Mal beim Einreihen in das Wartefeld seine bisher erlangten Wartefeldeigenschaften - wozu insbesondere die Priorität in der Warteschlange gehört - wieder genommen werden.

Die erfindungsgemäße Übertragung des die Wartefeldeigenschaft erhaltenden Parameters, beispielsweise in einem CSTA Service Deflect Call, bewirkt somit, dass der Anruf das Wartefeld logisch nicht verlässt. Dies ist bei Konfigurationen gemäß dem Stand der Technik nicht möglich. Eine äquivalente Kennzeichnung der in SIP-Methode Refer ist übrigens gleichwertig zum CSTA-Ansatz.

Gemäß einer bevorzugten Ausführungsform der Erfindung stellt die Position des Anrufs in dem Wartefeld bzw. mit anderen Worten die Priorität, die der Anruf in dem Wartefeld genießt, einen Bestandteil der Wartefeldeigenschaft dar.

Es ist von Vorteil, wenn die Applikation eine Software ist, die auf einem Applikationsserver läuft und der vom Ansagespeicher abgespielten bidirektionalen Ansage den mit dem die Wartefeldeigenschaft erhaltenden Parameter versehenen Anruf unter Verwendung eines CTI-Schaltauftrags zuweist. Dadurch kann die Applikation dynamisch bestimmen, ob der Anruf in dem Wartefeld bleiben soll oder nicht.

Es kann sich als vorteilhaft erweisen, wenn auch ein Anruf, der einer bidirektionalen - d. h. mit ihr interagierenden - Ansage zugeordnet ist bzw. wurde und dann nicht von einem Agenten übernommen werden kann, nach Beendigung der Ansage so in das Wartefeld zurückvermittelt wird, dass die Wartefeldeigenschaft des betreffenden Anrufs erhalten bleibt. Auf diese Weise gehen dem betreffenden Anruf bzw. der diesen Anruf tätigenden Person die Vorteile (insbesondere die Priorität der Bearbeitung) nicht verloren, die durch den Aufenthalt in dem Wartefeld bzw. der Warteschlange erworben worden sind.

Die Ausfallsicherheit des erfindungsgemäßen Verfahrens kann dadurch verbessert werden, dass die Wartefeldeigenschaften aller im Wartefeld befindlichen Anrufe in einer Weise gespeichert werden, dass sie auch nach einem Ausfall von bestimmten Systemkomponenten nicht verlorengehen, sondern im System, insbesondere in der Vermittlungseinheit, erhalten bleiben. Dadurch kann sichergestellt werden, dass die Anrufe in der Reihenfolge, in der sie sich vor dem Ausfall der betreffenden Systemkomponente befunden hatten, bearbeitet werden können und darüber hinaus auch nicht verlorengehen. Dies trägt nicht unwesentlich zur Kundenzufriedenheit der die Telekommunikationseinrichtung nutzenden Personen bei. Außerdem wird dadurch vermieden, dass die im Wartefeld befindlichen Anrufe ausgelöst werden müssen und dadurch dem System verlorengehen. Ein weiterer Vorteil besteht darin, dass die Anrufer, deren Anrufe sich im Wartefeld befinden, von einem entsprechenden Ausfall einer Systemkomponente nichts mitbekommen, da sie nicht nachteilig hiervon betroffen sind, indem sie beispielsweise "aus der Leitung geworfen" werden.

Diese Art der Notfallbehandlung für den Fall, dass die Applikation nicht mehr zur Verfügung steht, bietet den Vorteil, dass auf bidirektionale Ansagen geschaltete Anrufe nun in das Wartefeld zurückgeholt und weiterverteilt werden können, anstatt zwangsweise ausgelöst zu werden.

Die vorgenannte Notfallbehandlung kann dadurch noch weiter verbessert werden, dass die Vermittlungseinheit die gespeicherten Wartefeldeigenschaften dazu verwendet, Anrufe, die von dem Ansagespeicher ausgehen oder weitervermittelt werden, in das Wartefeld zurückzuvermitteln, wobei dies in vorteilhafter Weise auch selbsttätig bzw. automatisch erfolgen kann. Hierzu nutzt die Vermittlungseinheit eine entsprechende Kennung bzw. Markierung, um anstatt eines Besetztzeichens eine Rückvermittlung zu ermöglichen. Dadurch wird außerdem eine erleichterte Fehlerbehandlung nach einem aufgetretenen Ausfall einer Systemkomponente automatisiert und damit erleichtert und beschleunigt.

Die der Erfindung zugrundeliegende Aufgabe wird außerdem gelöst durch ein Computerprogrammprodukt bzw. ein Computerprogramm sowie einen maschinenlesbaren Datenträger zu dessen Speicherung. Die zuvor beschriebenen Merkmale und Vorteile des erfindungsgemäßen Verfahrens treffen auch auf das Computerprogrammprodukt bzw. das Computerprogramm sowie den Datenträger zu und werden deshalb zur Vermeidung unnötiger Wiederholungen nicht erneut dargelegt. Analoges gilt auch für das ebenfalls die der vorliegenden Erfindung zugrundeliegende Aufgabe lösende Telekommunikationssystem gemäß Anspruch 9.

Ein erfindungsgemäßes Telekommunikationssystem umfasst eine Vermittlungseinheit, die ein Wartefeld für Anrufe sowie eine Anrufverteileinheit bereitstellt. Jeder der im Wartefeld befindlichen Anrufe weist dabei eine bestimmte Wartefeldeigenschaft auf, wozu - wie bereits vorstehend beschrieben - beispielsweise die Position im Wartefeld und die Dauer des Wartens gehören können. An die Vermittlungseinheit kann ein Agentenendgerät angeschlossen werden, was bei einer in der Praxis auftretenden Telekommunikationsanordnung in der Regel in einem Callcenter insofern der Fall sein dürfte, dass gleich mehrere Agentenendgeräte bzw. Telefone angeschlossen sind. Ferner können Telekommunikationsendgeräte von entsprechenden Anrufern mittels eines Anrufs über ein Telefonnetz - beispielsweise Festnetz oder Mobilfunknetz - mit der Vermittlungseinheit in Verbindung treten, d. h. dort anrufen. Das Telekommunikationssystem weist ferner einen Ansagespeicher auf, der an die Vermittlungseinheit angebunden ist und auf dem mindestens eine bidirektionale Ansage gespeichert ist. Eine derartige bidirektionale Ansage zeichnet sich dadurch aus, dass sie zu einer Interaktion mit einem Anruf fähig ist und beispielsweise diesem bzw. der ihn tätigenden Person ermöglicht, die weitere Art der Behandlung des betreffenden Anrufs zu beeinflussen und in eine bestimmte Richtung zu verändern. Ferner weist das erfindungsgemäße Telekommunikationssystem eine Applikation auf, die üblicherweise als Software ausgebildet ist und an die Vermittlungseinheit sowie an den Ansagespeicher angekoppelt bzw. angebunden ist und dem Zuweisen bzw. Zuordnen von Anrufen zu einem Agenten, zu einer vom Ansagespeicher abgespielten bidirektionalen Ansage oder für die Bestimmung, dass der Anruf in dem Wartefeld verbleiben soll, dient. Das erfindungsgemäße Telekommunikationssystem zeichnet sich dadurch aus, dass die Anrufverteileinheit so ausgelegt bzw. ausgestaltet ist, dass sie einem Anruf, der einer bidirektionalen Ansage zugeordnet wird, einen Parameter zuweist, der die Beibehaltung der Wartefeldeigenschaft des Anrufs bewirkt und somit vermeidet, dass der Anruf die im Wartefeld erworbenen Rechte und Eigenschaften wie beispielsweise die Priorität oder Reihenfolge der Bearbeitung verliert.

Bei einer vorteilhaften Weiterbildung des erfindungsgemäßen Telekommunikationssystems ist der Ansagespeicher als ein Media-Server ausgebildet; der über das Session Initiation Protocol (auch mit SIP abgekürzt) an die Vermittlungseinheit angebunden bzw. mit ihr gekoppelt ist. Selbstverständlich kann die Verbindung zwischen dem Media-Server und der Vermittlungseinheit auch mittels anderer Protokolle erfolgen, wie beispielsweise dem Hypertext Transfer Protocol (kurz HTTP).

Wie bereits ausgeführt, gelten für das erfindungsgemäße Telekommunikationssystem die in Verbindung mit dem erfindungsgemäßen Verfahren beschriebenen Merkmale und Vorteile in analoger Weise, und dies gilt auch umgekehrt, sofern es nicht ausdrücklich anders angegeben ist.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine Ausführungsform eines erfindungsgemäßen Telekommunikationssystems mit nur einem im Wartefeld eingereihten, auf eine Ansage geschalteten Anruf,
- Fig. 2: das Telekommunikationssystem von Fig. 1 mit einem zusätzlichen, im Wartefeld eingereihten, Anruf,
- Fig. 3: eine Darstellung der Signalisierung eines wartenden Gesprächs an einem Endgerät eines Agenten,
- Fig. 4: eine Darstellung der Signalisierung eines wartenden Gesprächs bei einem Media-Server,
- Fig. 5: ebenfalls eine Darstellung der Signalisierung des wartenden Gesprächs beim Media-Server,
- Fig. 6: eine Darstellung, wie bei einem Telekommunikationssystem gemäß dem Stand der Technik bei einem Ausfall einer Systemkomponente ein Anruf verlorengeht,
- Fig. 7: eine Darstellung, wie bei einem erfindungsgemäßen Telekommunikationssystem ein Anrufer nach einem Ausfall einer Systemkomponente wieder eingereiht wird,
- Fig. 8: eine Darstellung der Veränderung des Wartefelds bei einem Telekommunikationssystem gemäß dem Stand der Technik bei Anschaltung eines Anrufs an eine Ansage,
- Fig. 9: eine Darstellung der Wiedereinreihung eines Anrufs bei nicht überschrittenem Limit des Wartefelds gemäß dem Stand der Technik,
- Fig. 10: eine Darstellung der Wiedereinreihung eines Anrufs bei überschrittenem Limit des Wartefelds gemäß dem Stand der Technik,
- Fig. 11: eine Darstellung der Situation bei anstehender Wiedereinreihung eines Anrufs und vollständig gefülltem Wartefeld gemäß dem Stand der Technik,
- Fig. 12: eine Darstellung eines Wartefelds bei einem erfindungsgemäßen Telekommunikationssystem bei Anschalten einer Ansage an einen Anruf,
- Fig. 13: eine Darstellung eines Wartefelds eines erfindungsgemäßen Telekommunikationssystems nach Zurückvermittlung des Anrufs, an den eine Ansage angeschaltet war,
- Fig. 14: eine Darstellung des Wartefelds eines erfindungsgemäßen Telekommunikationssystems nach Ausfall einer Systemkomponente und Rückvermittlung eines Anrufs, an den eine Ansage angeschaltet war,
- Fig. 15: eine schematische Darstellung eines Telekommunikationssystems gemäß dem Stand der Technik mit einem im Wartefeld befindlichen Anruf,
- Fig. 16: eine Darstellung eines bekannten Telekommunikationssystems, dessen einziger im Wartefeld befindliche Anruf an eine Ansage angeschaltet wurde, und
- Fig. 17: eine Darstellung eines bekannten Telekommunikationssystems, bei dem ein weiterer Anruf im Wartefeld aufgenommen worden ist.

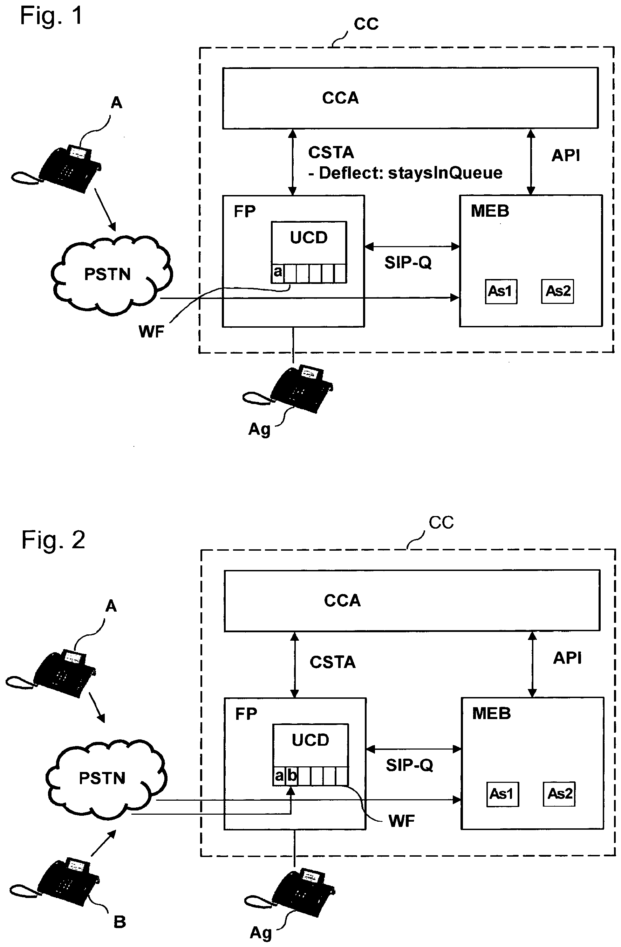

In Fig. 1 ist eine Konfiguration für ein Callcenter als Beispiel für das erfindungsgemäße Telekommunikationssystem CC gezeigt. Hierbei soll unter "Callcenter" nur der Computer-bezogene Teil einer solchen Einrichtung ohne Berücksichtigung der Räumlichkeiten, Personen etc. angesehen werden. Das Callcenter umfasst eine Vermittlungseinheit FP (die auch als Feature Processing bezeichnet wird), die ein Wartefeld WF für Anrufe (von denen nur ein einziger Anruf a dargestellt ist) und eine Anrufverteileinheit UCD (auch als Universal Call Distribution bezeichnet) bereitstellt bzw. enthält. Die vorliegende Erfindung wird am Beispiel von OpenScape Office bzw. HiPath 3000 als Komponenten für den Callcenter-Betrieb beschrieben, wobei die Erfindung nicht auf diese Komponenten beschränkt ist.

Das Callcenter CC umfasst außerdem einen Ansagespeicher MEB (auch als Media Extension Bridge bezeichnet), der in diesem Beispiel als Media-Server ausgebildet ist, der über SIP-Q (einer Variation von SIP) an die Vermittlungseinheit FP angebunden ist. Ein weiterer Bestandteil des Callcenters ist eine Callcenter-Applikation CCA, die über CSTA an die Vermittlungseinheit FP sowie über API (Application Programming Interface) an den Ansagespeicher MEB angebunden ist. In dem Ansagespeicher MEB sind verschiedene Arten von Ansagen gespeichert. Hierzu gehören beispielsweise unidirektionale oder "normale" Ansagen As2, die - beispielsweise über eine CSTA Service Play Message - mehreren Anrufern gleichzeitig vorgespielt werden können. Außerdem enthält der Ansagespeicher MEB mindestens eine bidirektionale Ansage As1, die einem dieser Ansage zugewiesenen bzw. an diese Ansage angeschalteten Anruf vorgespielt werden kann. Die Callcenter-Applikation CCA verteilt Callcenter-Anrufe auf die im Ansagespeicher MEB gespeicherten unidirektionalen Ansagen As2 und die bidirektionalen Ansagen As1. Die Callcenter-Applikation CCA dient dabei als übergeordnete Steuerung für das gesamte Callcenter-System. An das Callcenter CC ist (mindestens) ein Agent Ag angekoppelt. Außerdem kann ein Anrufer A über ein Telefonnetz PSTN (Public Switched Telephony Network), das auch ein Mobilfunknetz sein kann, mit der Vermittlungseinheit FP Kontakt aufnehmen bzw. dort anrufen. Die Callcenter-Applikation CCA verteilt dabei mithilfe der Vermittlungseinheit FP die Anrufe des Systems auf Ansagen As1, As2, Agenten Ag und das Wartefeld WF.

Das Callcenter weist des Weiteren einen - nicht eigens dargestellten - CSTA-Service-Provider (auch als CSP abgekürzt) auf, der als optionale Middleware für eine CSTA-Anschaltung verwendet wird.

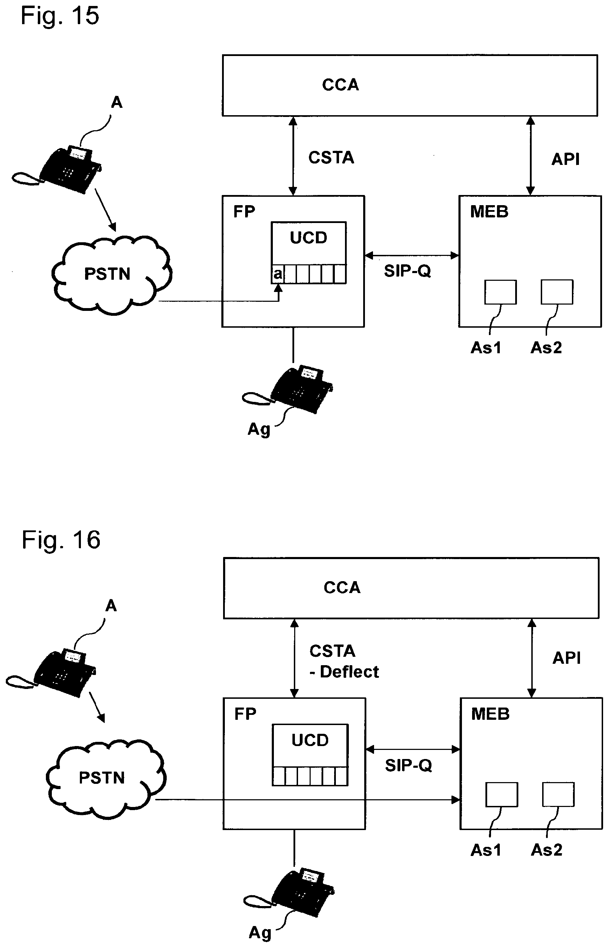

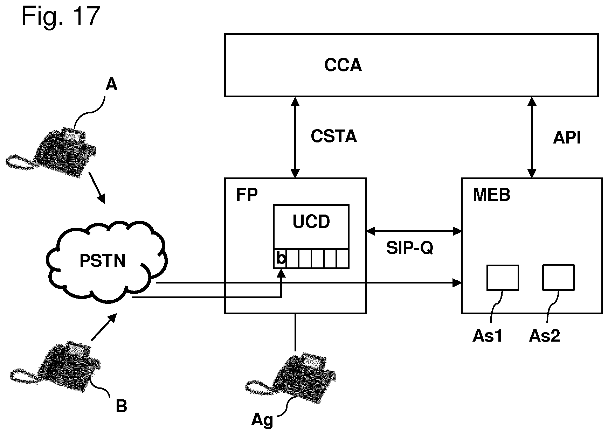

Die Funktionsweise der vorliegenden Erfindung soll ausgehend von einem gemäß dem Stand der Technik bekannten Callcenter anhand der Figuren 15 bis 17 erläutert werden. Die in Fig. 15 dargestellte Konfiguration ähnelt dabei der in Fig. 1 gezeigten erfindungsgemäßen Konfiguration sehr stark. Fig. 15 zeigt einen eingegangenen Anruf a, der in das Wartefeld WF der Vermittlungseinheit FP eingereiht ist. Ist gerade kein Agent verfügbar oder soll eine Begrüßungsansage As1 gespielt werden, so wird der Anrufer A bzw. der Anruf a durch die Callcenter-Applikation CCA aus dem Wartefeld WF heraus auf einen sogenannten SIP-Q-Trunk geschaltet, was im Fall der OpenScape Office und der HiPath 3000 mittels eines CSTA Deflect Call erfolgt. Der SIP-Q-Trunk spielt nun über den Ansagespeicher MEB eine Ansage As1 aus dem Callcenter ein. Da es sich bei der Ansage As1 um ein voll qualifiziertes bidirektionales Gespräch handelt, wird der Anruf a aus dem Wartefeld WF entnommen. Diese Situation ist in Fig. 16 dargestellt. Geht nun ein weiterer Anruf b von einem Anrufer B ein, wird dieser Anruf b an diejenige Stelle im Wartefeld WF eingereiht, an der sich vorher der Anruf a befunden hatte (der nun zum Ansagespeicher MEB durchgeschaltet ist). Diese Situation ist in Fig. 17 dargestellt. Aus dieser Darstellung ergibt sich außerdem, dass der Anruf a somit seine Position im Wartefeld und damit auch die entsprechende Wartefeldeigenschaft verloren hat.

Anders als bei dem vorstehend geschilderten Stand der Technik wird nun erfindungsgemäß so vorgegangen, dass der Anruf a - obwohl er an den Ansagespeicher MEB durchgeschaltet ist, vgl. Fig. 1 - seine Position im Wartefeld WF und damit auch seine diesbezügliche Wartefeldeigenschaft behält. Ein nachfolgender Anruf b von einem Anrufer B wird daher, wie in Fig. 2 gezeigt, in einer bezüglich der Position des Anrufs a nachrangigen Position im Wartefeld WF eingereiht und belegt daher nicht die ursprüngliche Wartefeldposition von Anruf a. Diese Beibehaltung der ursprünglichen Wartefeldeigenschaft für den Anruf a wird dadurch erreicht, dass die Anrufverteileinheit UCD dem Anruf a einen Parameter siQ (kurz für staysInQueue) zuweist, der die entsprechenden Wartefeldeigenschaften des Anrufs a aufrechterhält bzw. deren Aufrechterhaltung bewirkt. Dies geschieht dadurch, dass der für die Anschaltung der Ansage As1 verwendete CSTA Service Deflect Call mit genau diesem Parameter siQ gekennzeichnet wird.

Durch die Anwendung des Parameters siQ wird außerdem die Wartefeldauslastung im Callcenter begünstigt, da die Wartefeldauslastung in der Applikation der Wartefeldauslastung im Gesamtsystem entspricht. Dies hat außerdem den Vorteil, dass nur noch an einer einzigen Stelle das absolute Limit für die maximale Anzahl wartender Anrufe festgelegt werden muss. Im Umfeld der HiPath 3000 und der OpenScape Office wird dieser Parameter im System festgelegt und über CSTA der Callcenter-Applikation mitgeteilt.

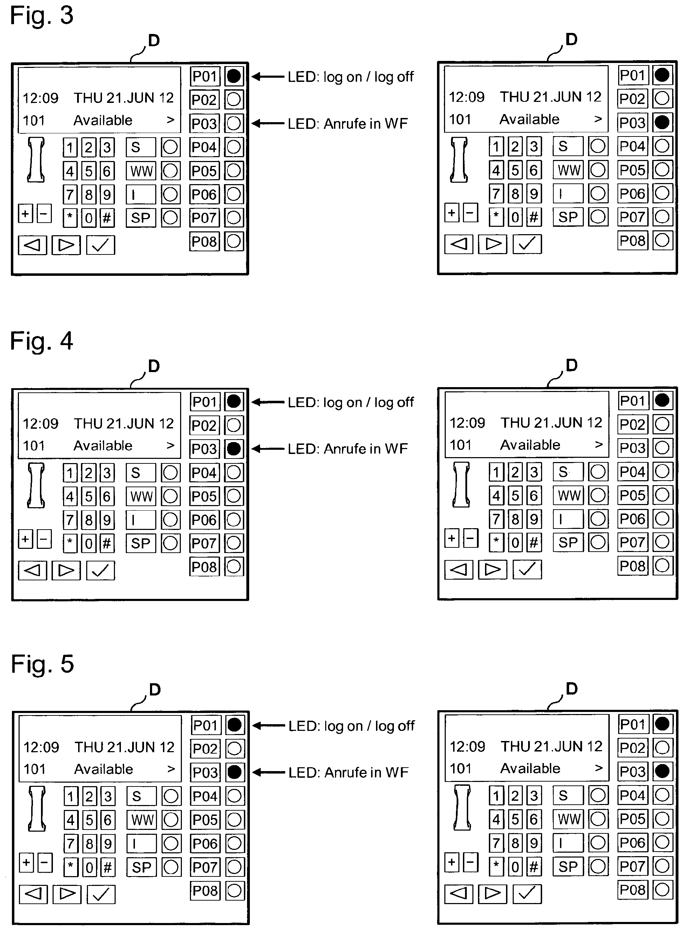

Durch die Anwendung des Parameters siQ zum Erhalt der Wartefeldeigenschaften ergibt sich außerdem, dass wartende Anrufe dem Agenten auch weiterhin am Endgerät signalisiert werden können. Passend zur Situation gemäß Fig. 15 kann dem Agenten auf seinem Display D das wartende Gespräch gemäß dem linken Teil der Fig. 3 durch eine LED signalisiert werden, wobei dieser linke Teil die Situation vor dem Anruf zeigt. Die im linken Teil der Fig. 3 rechts oben leuchtende LED steht dafür, dass der Agent eingeloggt ist. Der rechte Teil der Fig. 3 zeigt die Situation nach Annahme des Anrufs, wobei hier auch die Anzahl der im Wartefeld befindlichen Anrufe neben dem Feld P03 angezeigt ist. Wie bereits zuvor beschrieben, wird der Anruf a aus dem Wartefeld WF bei einem Callcenter CC gemäß dem Stand der Technik entfernt, was auf der ein Display D des Callcenters CC zeigenden rechten Seite von Fig. 4 dargestellt ist (die linke Seite von Fig. 4 entspricht der rechten Seite von Fig. 3), da der Anruf durch die Weiterschaltung auf einen SIP- bzw. SIP-Q-Media-Server seine Wartefeldeigenschaften verloren hat und somit dieser Anruf dem Agenten nicht weiter signalisiert werden kann.

Anders als beim Stand der Technik wird bei der vorliegenden Erfindung jedoch so verfahren, vgl. Fig. 5, dass der Anruf a bei Weiterschaltung an den SIP- bzw. SIP-Q-Media-Server dem Agenten weiter signalisiert wird, was durch die gleiche Darstellung der linken und der rechten Seite in Fig. 5 symbolisiert ist, wobei die Wartefeldeigenschaften in beschriebener Weise erhalten bleiben. Die Darstellung in Fig. 5 entspricht dabei der Situation von Fig. 2.

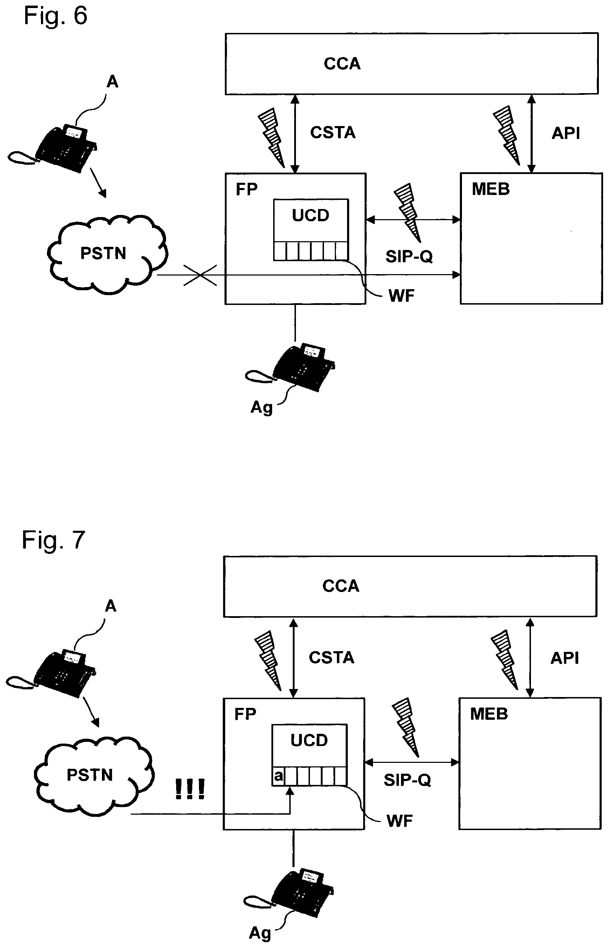

Ein weiterer Vorteil der vorliegenden Erfindung ist auch im Hinblick auf die Ausfallsicherheit ersichtlich. Fällt nämlich während des Abspielens einer Callcenter-Ansage As1 über einen Media-Server eine Systemkomponente oder eine der folgenden Verbindungen - CSTA-Link zwischen CCA/CSP und FP; SIP-Q-Strecke zwischen FP und MEB; API-Interface zwischen CCA und MEB - aus, so geht der Anruf a bei einem Callcenter gemäß dem Stand der Technik verloren, was in Fig. 6 symbolisch dargestellt ist.

Anders dagegen ist die Situation bei Anwendung der vorliegenden Erfindung, wo durch die Anwendung des Parameters siQ die Wartefeldeigenschaften des hier als Beispiel angesehenen Anrufs a erhalten bleiben. Dies hat zur Folge, dass der Anruf bei den genannten Ausfällen durch die Vermittlungseinheit FP automatisch in das Wartefeld WF zurückgeholt werden kann - wobei selbstverständlich die ursprünglichen Wartefeldeigenschaften erhalten bleiben - und der Anruf daher nicht verlorengeht. Dies ist in Fig. 7 dargestellt, in der der Anruf a im Wartefeld WF dargestellt ist. Nachdem der Anruf a wieder in das Wartefeld WF eingereiht worden ist, kann je nach Art des Teilausfalls oder des Gesamtausfalls entweder die Callcenter-Applikation CCA oder die Vermittlungseinheit FP die Verteilung des Anrufs a übernehmen.

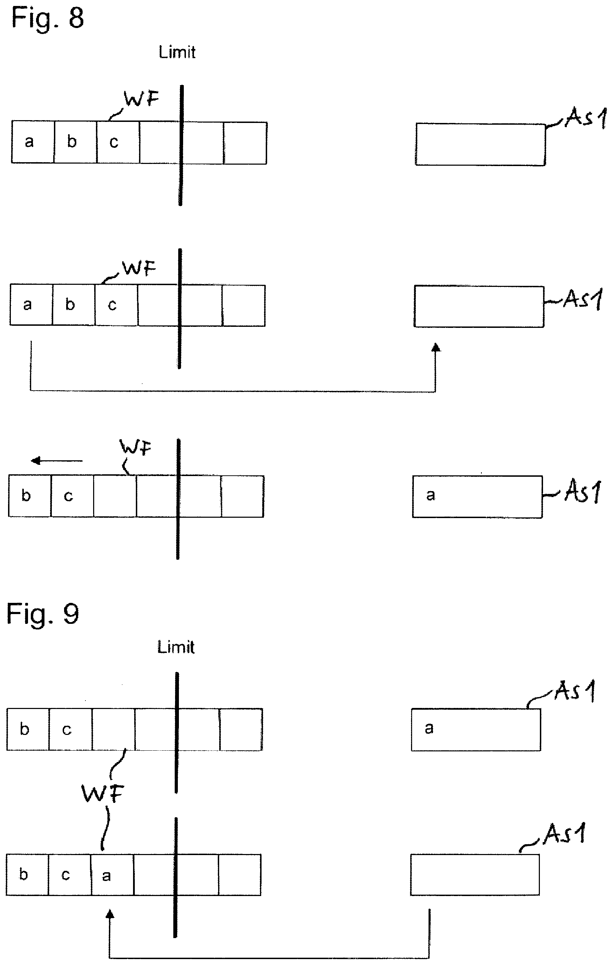

Unter Bezugnahme auf die Fig. 8 bis 14 soll anhand der Komponentenverteilung, wie sie in der OpenScape Office und HiPath 3000 vorzufinden ist, die Wirkungsweise der vorliegenden Erfindung beschrieben werden. Die Anschaltung der Ansagen erfolgt über einen Media-Server mittels SIP-Q, ist jedoch nicht hierauf beschränkt. Die Callcenter-Applikation CCA steuert die Plattform über CSTA und verfügt über eine Programmierschnittstelle zum Media-Server.

Gemäß Fig. 8 wird bei einem Callcenter gemäß dem Stand der Technik ein Anruf a auf die Ansage As1 geleitet (vgl. Bildmitte), und die Anrufe b und c rücken gemäß dem unteren Teil von Fig. 8 im Wartefeld WF nach; der Anruf b nimmt somit die ursprüngliche Position des Anrufs a ein. Nach Beendigung der Ansage wird der Anruf a gemäß Fig. 9 wieder in das Wartefeld WF eingereiht, und zwar an letzter Stelle der Prioritätsreihenfolge, wo sich ursprünglich der Anruf c befunden hatte. Die in Fig. 9 gezeigte Situation stellt dabei den Zustand dar, dass das Wartefeld WF nicht bis zu der maximalen Anzahl bzw. dem durch eine senkrechte Trennlinie bezeichneten Limit gefüllt ist und somit mehr als die unbedingt erforderlichen Plätze für das Wiedereinreihen von zurückkommenden Anrufen (auch als "Reserve" bezeichnet, die hier oberhalb bzw. rechts vom Limit dargestellt ist), freigeblieben sind.

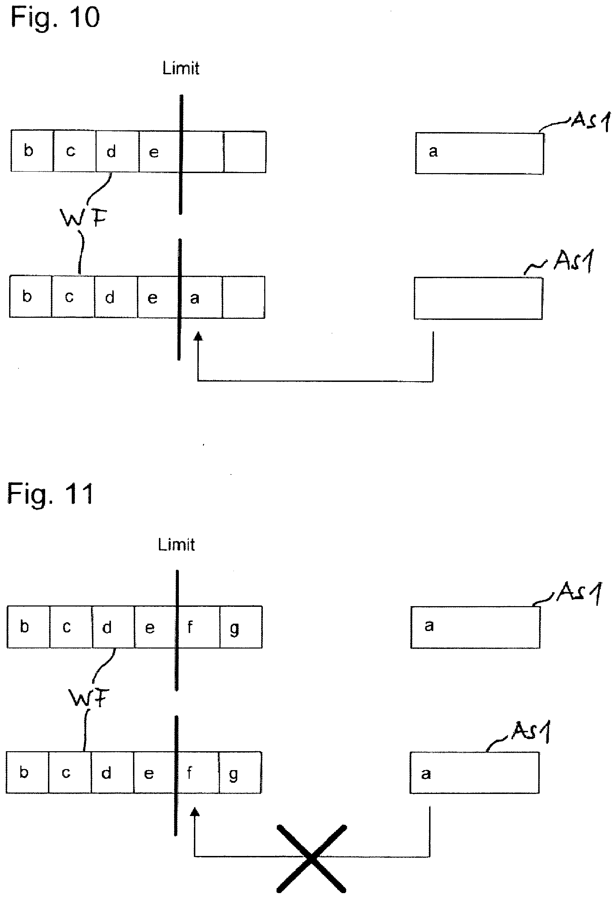

In Fig. 10 ist dagegen die Situation gezeigt, dass der Anruf a nach Beendigung der Ansage durch den Media-Server wieder in das Wartefeld WF eingereiht wird, bei dem alle Plätze bis zum Limit belegt sind. Demzufolge wird der Anruf a an eine der Reservestellen (d. h. oberhalb des Limits befindliche Stellen) eingereiht.

Eine noch extremere Situation ist in Fig. 11 dargestellt, aus der sich ergibt, dass ein Anruf a nach Beendigung der Ansage durch den Media-Server gar nicht mehr in das Wartefeld WF eingereiht werden kann, da dieses (unter Ausnutzung auch der Reserveplätze) vollständig belegt ist. Dies bedeutet, dass der Anruf a bei dem aus dem Stand der Technik bekannten Callcenter CC in dieser Situation verloren wird.

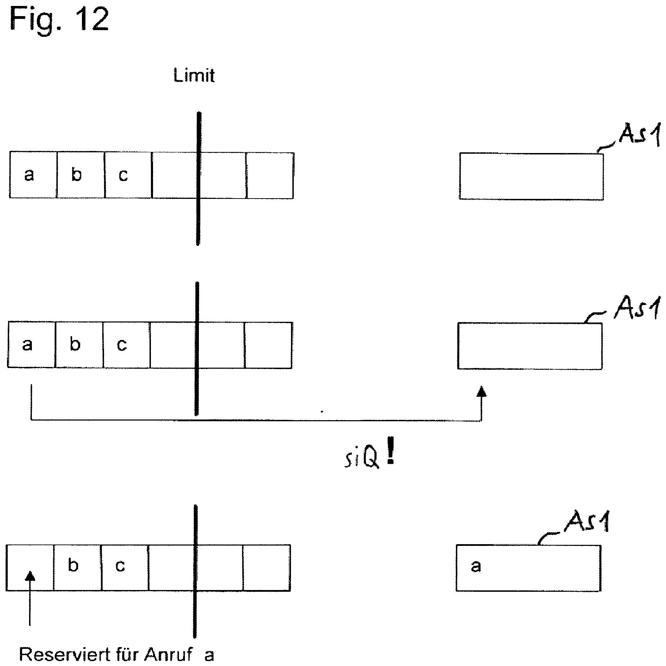

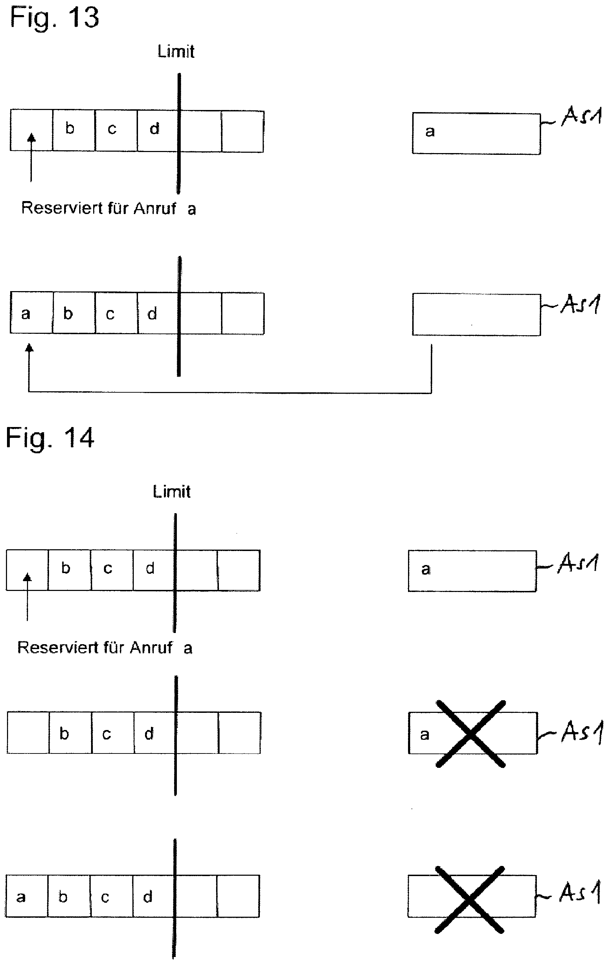

Anders dagegen stellt sich die Situation bei Anwendung der vorliegenden Erfindung dar, wie unter Bezug auf die Fig. 12 bis 14 ersichtlich ist. Gemäß Fig. 12 wird der Anruf a auf die Ansage des Media-Servers geleitet, und da diese Weiterleitung mit dem Parameter siQ gekennzeichnet wird, bleibt die ursprüngliche Position des Anrufs a im Wartefeld WF erhalten. Sobald gemäß Fig. 13 die Ansage beendet ist, kann erfindungsgemäß der Anruf a an seiner ursprünglichen Stelle bzw. Position wieder in das Wartefeld WF eingereiht werden. Auch bei Ausfall einer Systemkomponente, wie beispielsweise der Callcenter-Applikation, ergibt sich ein ähnliches Bild: Der Anruf a, der sich gemäß dem oberen Teil von Fig. 14 an die Ansage vermittelt befand, wird automatisch durch das System zurückgeholt und an seiner ursprünglichen Position wieder in das Wartefeld WF integriert. Somit ist die Ausfallsicherheit und die Notfallbehandlung des erfindungsgemäßen Telekommunikationssystems stark erhöht.

Aus dem vorstehend beschriebenen Ablauf ist somit zu ersehen, dass die Anwendung des Parameters siQ gewährleistet, dass ein applikationsgeführtes Gespräch die aktuellen Wartefeldeigenschaften, wie insbesondere die Position und die Wartezeit bei Anschaltung einer bidirektionalen Ansage As1, nicht verliert, sondern stattdessen die aktuellen Wartefeldeigenschaften für diesen Anruf a weiterhin zur Verfügung stehen. Dadurch ist unter anderem folgendes gewährleistet:
- Das Wiedereinreihen des Anrufs a an die ursprüngliche Wartefeldposition und nicht an eine nachrangige Position,
- eine Identität der Wartefeldauslastung im System und in der Applikation,
- eine optimale Ausnutzung des Wartefeldes,
- eine maximale Auslastung des Wartefeldes, da keine Plätze im Wartefeld für das Wiedereinreihen von mit Ansagen verbundenen Anrufen reserviert werden müssen,
- eine Erhaltung der Gesamtwartezeit,
- verbesserte Anzeigen beim Agenten.

Gemäß der vorliegenden Erfindung ist auch eine verbesserte Notfallbehandlung möglich, falls beispielsweise die Callcenter-Applikation vorübergehend nicht mehr zur Verfügung steht. Dadurch können Ansagen automatisch in das Wartefeld WF zurückgeholt und vom System weiterverteilt werden und müssen nicht wie nötig ausgelöst werden. Somit gehen die betreffenden Anrufe nicht verloren.

Es bleibt festzuhalten, dass der in den vorstehenden Darstellungen der OpenScape Office verwendete SIP-Q-Media-Server in Bezug auf die erforderliche Funktionalität bei dieser Erfindung äquivalent zu einem SIP-Media-Server ist, wofür als Beispiel ein OpenScape-Media-Server zu nennen wäre.

Außerdem ist zu betonen, dass die Verwendung des Parameters siQ in CSTA nur ein Beispiel darstellt, wobei für über SIP oder andere Protokolle angeschaltete Callcenter-Applikationen eine entsprechende, analoge Kennzeichnung des Anrufs gilt.

Es ist festzuhalten, dass die unter Bezug auf die dargestellten Ausführungsformen beschriebenen Merkmale der Erfindung, wie beispielsweise die Art und Ausgestaltung der verwendeten Parameter, Steuerbefehle, Protokolle und Hardware-Komponenten, auch bei anderen Ausführungsformen oder Varianten hiervon vorhanden sein können, außer wenn es anders angegeben ist oder sich aus technischen Gründen von selbst verbietet.

### Bezugszeichenliste

A, B = Telekommunikationsendgerät/Anrufer
a-g = Anruf
Ag = Agentenendgerät
As1 = bidirektionale Ansage
As2 = unidirektionale Ansage
ASV = Applikationsserver
CC = Telekommunikationssystem/Callcenter
CCA = Callcenter-Applikation
D = Display
FP = Vermittlungseinheit
MEB = Ansagespeicher/Media-Server
siQ = Parameter
PSTN = Telefonnetz
UCD = Anrufverteileinheit
WF = Wartefeld

## Patentansprüche

1. Verfahren zur optimalen Auslastung eines in einem Telekommunikationssystem (CC) vorgesehenen, durch eine Applikation (CCA) gesteuerten Wartefeldes (WF) für Anrufe (a, b, c, d, e, f, g), wobei das Wartefeld (WF) von einer Vermittlungseinheit (FP) bereitgestellt wird, und wobei jeder in dem Wartefeld (WF) befindliche Anruf (a, b, c, d, e, f, g) eine bestimmte Wartefeldeigenschaft aufweist, welche eine Position und Priorität des Anrufs (a, b, c, d, e, f, g) in dem Wartefeld (WF) kennzeichnet, und einem Agenten (Ag) oder einer von einem Ansagespeicher (MEB) abgespielten, zu einer Interaktion mit einem Anruf (a) fähigen, bidirektionalen Ansage (As1) aus dem Wartefeld (WF) zugeordnet wird, wobei das Verfahren die folgenden Schritte umfasst
- Einreihen eines ersten eingehenden Anrufs (a) an einer ersten Position im Wartefeld (WF) der Vermittlungseinheit (FP),
- Durchschalten des ersten Anrufs (a) an einen Ansagespeicher (MEB), welcher an die Vermittlungseinheit (FP) angebunden ist und auf welchem zumindest eine bidirektionale Ansage gespeichert ist weiters **gekennzeichnet durch**
- Einreihen eines nach dem ersten Anruf (a) eingehenden Anrufs (b) in einer bezüglich der ersten Position des ersten Anrufs (a) nachrangigen zweiten Position in dem Wartefeld (WF), wobei eine Anrufverteileinheit (UCD) der Vermittlungseinheit (FP) dem ersten Anruf (a) einen stayslnQueue Parameter (siQ) zuweist, der die Aufrechterhaltung der Wartefeldeigenschaften des ersten Anrufs (a) bewirkt **durch** Kennzeichnen eines für die Anschaltung der Ansage (As1) verwendeten CSTA Service Deflect Call mit dem stayslnQueue Parameters, und
- Einreihen des ersten Anrufs (a) nach Beenden der Ansage (As1) an die ursprüngliche erste Position im Wartefeld (a),
wobei die Vermittlungseinheit (FP) die gespeicherten Wartefeldeigenschaften dazu verwendet, von dem Ansagespeicher (MEB) ausgehende oder weitervermittelte Anrufe (a) in das Wartefeld (WF) an ihren ursprünglichen Platz im Wartefeld (WF) zurückzuvermitteln.

2. Verfahren nach Anspruch 1,
**dadurch gekennzeichnet, dass** die Applikation (CCA) auf einem Applikationsserver (ASV) läuft und der vom Ansagespeicher (MEB) abgespielten bidirektionalen Ansage (As1) den mit dem Parameter (siQ) versehenen Anruf (a) mittels eines CTI-Schaltauftrags zuweist.

3. Verfahren nach einem der vorhergehenden Ansprüche,
**dadurch gekennzeichnet, dass** die Wartefeldeigenschaften aller im Wartefeld (WF) befindlichen Anrufe (a, b, c, d, e, f, g) so gespeichert werden, dass sie auch bei Ausfall von Systemkomponenten in der Vermittlungseinheit (FP) erhalten bleiben.

4. Computerprogrammprodukt für eine Vermittlungseinheit (FP) eines Telekommunikationssystems (CC) zum Durchführen eines Verfahrens gemäß einem der vorhergehenden Ansprüche.

5. Maschinenlesbarer Datenträger (42) mit einem auf dem Datenträger (42) gespeicherten Computerprogrammprodukt (40) gemäß Anspruch 4.

6. Telekommunikationssystem (CC), welches zum Durchführen des Verfahrens gemäß den Ansprüchen 1 bis 3 ausgelegt ist, umfassend
- eine Vermittlungseinheit (FP), die ein Wartefeld (WF) für Anrufe (a, b, c, d, e, f, g) und eine Anrufverteileinheit (UCD) bereitstellt, wobei jeder im Wartefeld (WF) befindliche Anruf (a, b, c, d, e, f, g) eine bestimmte Wartefeldeigenschaft aufweist, welche eine Position und Priorität des Anrufs (a, b, c, d, e, f, g) in dem Wartefeld (WF) kennzeichnet, und wobei an die Vermittlungseinheit (FP) ein Agentenendgerät (Ag) anschließbar ist und jeweiligen Anrufern zugeordnete Telekommunikationsendgeräte (A, B) mittels eines Anrufs (a, b, c, d, e, f, g) über ein Telefonnetz (PSTN) mit der Vermittlungseinheit (FP) in Verbindung treten können,
- einen Ansagespeicher (MEB), der an die Vermittlungseinheit (FP) angebunden ist und auf dem mindestens eine bidirektionale Ansage (As1), die zu einer Interaktion mit einem Anruf (a) fähig ist, gespeichert ist, und
- eine Applikation (CCA), die an die Vermittlungseinheit (FP) und an den Ansagespeicher (MEB) angebunden ist und zum Zuordnen von Anrufen (a, b, c, d, e, f, g) zu einem Agenten (Ag) oder einer vom Ansagespeicher (MEB) abgespielten bidirektionalen Ansage (As1) aus dem Wartefeld (WF) bestimmt ist,
**dadurch gekennzeichnet, dass** die Anrufverteileinheit (UCD) dafür ausgelegt ist, den im Wartefeld (WF) befindlichen Anrufen (a, b, c, d, e, f, g), die jeweils einer bidirektionalen Ansage (As1) zugeordnet werden, einen jeweiligen stayslnQueue Parameter (siQ) zuzuweisen, der die Aufrechterhaltung der Wartefeldeigenschaft der jeweiligen Anrufe (a, b, c, d, e, f, g) bewirkt durch Kennzeichnen eines für die Anschaltung der Ansage (As1) verwendeten CSTA Service Deflect Call mit dem stayslnQueue Parameter,
wobei die Vermittlungseinheit (FP) des Telekommunikationssystems (CC) die gespeicherten Wartefeldeigenschaften dazu verwendet, von dem Ansagespeicher (MEB) ausgehende oder weitervermittelte Anrufe (a) in das Wartefeld (WF) zurückzuvermitteln, wobei die zurückvermittelten Anrufe (a) ihren ursprünglichen Platz im Wartefeld (WF) behalten.

7. Vorrichtung nach Anspruch 6,
**dadurch gekennzeichnet, dass** der Ansagespeicher (MEB) ein Media-Server ist, der über das Session Initiation Protocol (SIP) an die Vermittlungseinheit (FP) angebunden ist.

## Claims

1. A method for optimal utilisation of a waiting field (WF) for calls (a, b, c, d, e, f, g), which is controlled by an application (CCA), provided in a telecommunication system (CC), wherein the waiting field (WF) is provided by a switching unit (FP), and wherein each of the calls (a, b, c, d, e, f, g) in the waiting field (WF) has a specific waiting field characteristic characterizing a position and priority of the call (a, b, c, d, e, f, g) in said waiting field (WF), and is assigned to an agent (Ag) or a bidirectional message (As1) from the waiting field (WF), which is played back from a message memory (MEB) and capable of interacting with a call (a),
wherein the method comprises the following steps:
- queuing a first incoming call (a) at a first position in the waiting field (WF) of the switching unit (FP),
- switching the first call (a) to a message memory (MEB), which is connected to the switching unit (FP) and in which message memory at least one bidirectional message is stored, further **characterized by**
- queuing a call (b), received after the first call (a), at a subsequent second position in the waiting field (WF) with respect to the first position of the first call (a), wherein a call distribution unit (UCD) of the switching unit (FP) assigns a stayslnQueue parameter (siQ) to the first call (a), thus maintaining the waiting field characteristics of the first call (a) by identifying a CSTA Service Deflect Call used for turning on the message (As1) by means of the stayslnQueue parameter, and
- queuing the first call (a), after terminating the message (As1), to the original first position in the waiting field (a),
wherein the switching unit (FP) uses the stored waiting field characteristics to switch back calls (a) originating from or switched through from the message memory (MEB) to the waiting field (WF) to their original place in the waiting field (WF).

2. The method according to claim 1,
**characterized in that** the application (CCA) runs on an application server (ASV) and assigns the bidirectional message (As1) played by the message memory (MEB) to the call (a) provided with the parameter (siQ) by means of a CTI switching order.

3. The method according to any of the preceding claims,
**characterized in that** the waiting field characteristics of all calls (a, b, c, d, e, f, g) in the waiting field (WF) are stored such that they remain in the switching unit (FP), even in case of system component failure.

4. A computer program product for a switching unit (FP) of a telecommunication system (CC) for implementing a method according to any of the previous claims.

5. A machine-readable data carrier (42) having a computer program product (40) according to claim 4, stored in the data carrier (42).

6. A telecommunication system (CC), which is adapted to implement the method according to claims 1 to 3, comprising
- a switching unit (FP), which provides a waiting field (WF) for calls (a, b, c, d, e, f, g) and a call distribution unit (UCD), wherein every call (a, b, c, d, e, f, g) in the waiting field (WF) has a specific waiting field characteristic, which identifies a position and priority of the call (a, b, c, d, e, f, g) in the waiting field (WF), and wherein an agent terminal (Ag) can be connected to the switching unit (FP), and telecommunication terminals (A, B) assigned to respective callers, can contact the switching unit (FP) by means of a call (a, b, c, d, e, f, g) via a telephone network (PSTN),
- a message memory (MEB), which is connected to the switching unit (FP) and wherein at least one bidirectional message (As1) is saved and capable of interacting with a call (a), and
- an application (CCA), which is connected to the switching unit (FP) and the message memory (MEB), and is intended to assign calls (a, b, c, d, e, f, g) to an agent (Ag) or a bidirectional message (As1) from the waiting field (WF), which is played back by the message memory (MEB),
**characterized in that** the call distribution unit (UCD) is adapted to assign a respective stayslnQueue parameter (siQ) to the calls (a, b, c, d, e, f, g) in the waiting field (WF), each call being assigned a bidirectional message (As1), thus maintaining the waiting field characteristics of the respective calls (a, b, c, d, e, f, g) to by identifying a CSTA Service Deflect Call used for switching on the message (As1) by means of the stayslnQueue parameter,
wherein die switching unit (FP) of the telecommunication system (CC) uses the stored waiting field characteristics to switch back calls (a) originating from or switched through by the message memory (MEB) to the waiting field (WF), wherein the switched back calls (a) retain their original place in the waiting field (WF).

7. The device according to claim 6,
**characterized in that** the message memory (MEB) is a media server, which is connected to the switching unit (FP) via the Session Initiation Protocol (SIP).

## Revendications

1. Procédé d'utilisation optimale d'une file d'attente (WF) pour des appels (a, b, c, d, e, f, g) prévue dans un système de télécommunication (CC), commandée par une application (CCA), dans lequel la file d'attente (WF) est mise à disposition par une unité de transfert (FP) et dans lequel chaque appel (a, b, c, d, e, f, g) se trouvant dans la file d'attente (WF) présente un certain attribut de file d'attente, qui caractérise une position et une priorité de l'appel (a, b, c, d, e, f, g) dans la file d'attente (WF), et est associé à partir de la file d'attente (WF) à un agent (Ag) ou à une annonce bidirectionnelle (As1) lue par une mémoire d'annonces (MEB), capable d'une interaction avec un appel (a),
dans lequel le procédé comporte les étapes suivantes :
- l'insertion d'un premier appel arrivant (a) à une première position dans la file d'attente (WF) de l'unité de transfert (FP),
- la connexion du premier appel (a) à une mémoire d'annonces (MEB), laquelle est reliée à l'unité de transfert (FP) et sur laquelle est mémorisée au moins une annonce bidirectionnelle, **caractérisé en outre par**
- l'insertion d'un appel (b) arrivant après le premier appel (a) à une seconde position, de rang inférieur par rapport à la première position du premier appel (a), dans la file d'attente (WF), dans lequel une unité de distribution d'appels (UCD) de l'unité de transfert (FP) attribue au premier appel (a) un paramètre stayslnQueue (siQ) qui provoque le maintien des attributs de file d'attente du premier appel (a) par caractérisation d'un Service Deflect Call de CSTA, employé pour la connexion de l'annonce (As1), avec le paramètre stayslnQueue, et
- l'insertion du premier appel (a) après la fin de l'annonce (As1) à la première position originale dans la file d'attente (a),
dans lequel l'unité de transfert (FP) emploie les attributs de file d'attente mémorisés pour retransférer des appels déjà transférés ou sortants de la mémoire d'annonces (MEB) (a) dans la file d'attente (WF) à leur place d'origine dans la file d'attente (WF),

2. Procédé selon la revendication 1,
**caractérisé en ce que** l'application (CCA) se déroule sur un serveur d'applications (ASV) et assigne à l'annonce (As1) bidirectionnelle lue par la mémoire d'annonces (MEB) l'appel (a) pourvu du paramètre (siQ) au moyen d'un ordre de connexion de CTI.

3. Procédé selon l'une quelconque des revendications précédentes,
**caractérisé en ce que** les attributs de file d'attente de tous les appels (a, b, c, d, e, f, g) se trouvant dans la file d'attente (WF) sont mémorisés de sorte qu'ils restent maintenus également en cas de panne de composants système dans l'unité de transfert (FP).

4. Produit-programme d'ordinateur pour une unité de transfert (FP) d'un système de télécommunication (CC) pour l'exécution d'un procédé selon l'une quelconque des revendications précédentes.

5. Support de données lisible par machine (42) avec un produit-programme d'ordinateur (40) selon la revendication 4 mémorisé sur le support de données (42).

6. Système de télécommunication (CC), lequel est conçu pour l'exécution du procédé selon les revendications 1 à 3, comportant
- une unité de transfert (FP), qui met à disposition une file d'attente (WF) pour des appels (a, b, c, d, e, f, g) et une unité de distribution d'appels (UCD), dans lequel chaque appel (a, b, c, d, e, f, g) se trouvant dans la file d'attente (WF) comprend un certain attribut de file d'attente, qui caractérise une position et une priorité de l'appel (a, b, c, d, e, f, g) dans la file d'attente (WF), et dans lequel un appareil terminal d'agent (Ag) peut être raccordé à l'unité de transfert (FP) et des appareils terminaux de télécommunication (A, B) associés à des appelants respectifs peuvent entrer en contact avec l'unité de transfert (FP) au moyen d'un appel (a, b, c, d, e, f, g) via un réseau téléphonique (PSTN),
- une mémoire d'annonces (MEB), qui est reliée à l'unité de transfert (FP) et sur laquelle est mémorisée au moins une annonce bidirectionnelle (As1) qui est capable d'une interaction avec un appel (a), et
- une application (CCA), qui est reliée à l'unité de transfert (FP) et à la mémoire d'annonces (MEB) et est déterminée pour l'association d'appels (a, b, c, d, e, f, g) à partir de la file d'attente (WF) à un agent (Ag) ou à une annonce bidirectionnelle (As1) lue par la mémoire d'annonces (MEB),
**caractérisé en ce que** l'unité de distribution d'appels (UCD) est conçue pour affecter aux appels (a, b, c, d, e, f, g) se trouvant dans la file d'attente (WF), qui sont chacun associés à une annonce bidirectionnelle (As1), un paramètre stayslnQueue (siQ) respectif qui provoque le maintien de l'attribut de file d'attente des appels (a, b, c, d, e, f, g) respectifs par la caractérisation d'un Service Deflect Call de CSTA, employé pour la connexion de l'annonce (As1), avec le paramètre stayslnQueue,
dans lequel l'unité de transfert (FP) du système de télécommunication (CC) emploie les attributs de file d'attente mémorisés pour retransférer des appels sortant de la mémoire d'annonces (MEB) ou déjà transférés (a) dans la file d'attente (WF), dans lequel les appels (a) retransférés conservent leur place d'origine dans la file d'attente (WF).

7. Dispositif selon la revendication 6,
**caractérisé en ce que** la mémoire d'annonces (MEB) est un serveur multimédia qui est relié à l'unité de transfert (FP) via le protocole d'ouverture de session (SIP).
